(19) Europäisches Patentamt
European Patent Office
Office européen des brevets

(11) **EP 2 731 047 B1**

(12) **EUROPEAN PATENT SPECIFICATION**

(45) Date of publication and mention
of the grant of the patent:
**04.01.2017 Bulletin 2017/01**

(51) Int Cl.:
***G06K 7/00*** *(2006.01)*

(21) Application number: **12192412.0**

(22) Date of filing: **13.11.2012**

(54) **Method and apparatus for controlling a read-out of a radio frequency identification unit**

Verfahren und Vorrichtung zur Steuerung der Ablesung einer Funkfrequenzidentifikationseinheit

Procédé et appareil pour commander la lecture d'une unité d'identification de fréquence radio

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2014 Bulletin 2014/20**

(73) Proprietor: **ALCATEL LUCENT**
**92100 Boulogne-Billancourt (FR)**

(72) Inventors:
• **Noack, Ferenc**
**12353 Berlin (DE)**

• **Lange, Christian**
**15370 Fredersdorf-Vogelsdorf (DE)**

(74) Representative: **Hofmann, Dirk**
**Alcatel-Lucent Deutschland AG**
**Intellectual Property & Standards**
**Lorenzstrasse 10**
**70435 Stuttgart (DE)**

(56) References cited:
**US-A1- 2006 197 652     US-A1- 2009 309 704**

## Description

### FIELD OF THE INVENTION

Embodiments of the invention relate to radio frequency identification of movable apparatuses and, more particularly but not exclusively, to radio frequency identification of electric powered vehicles.

### BACKGROUND

A range or cruising range of electric powered vehicles is limited by a capacity of a rechargeable battery and is usually much lower than a range or cruising range of fuel powered vehicles. The cruising range of the electric powered vehicles can be significantly increased, when the rechargeable battery is recharged in a wireless way while driving or parking. Therefore, an inductive coil system may be embedded in roads and parking lots and a further inductive coil system may be embedded in each electric powered vehicle. For accounting the electrical energy provided from the inductive coil system, the electric powered vehicles may be equipped with so-called RFID tags or RFID labels (RFID = radio frequency identification).

RFID systems are widely used for identifying object such as products, passports, animals, books in a library, runners in footrace etc. The RFID tags or RFID labels include a small RF transmitter and RF receiver (RF = radio frequency). The RF receiver may receive a message from a so-called RFID reader. The RF transmitter responds to the message with an ID number (ID = identification). The ID number can be a unique tag serial number or product related information such as a stock number, a lot number, a production date etc.

A transfer of the electrical energy from the road based or parking lot based inductive coil system to the vehicle based inductive coil system strongly depends on a distance between both inductive coil systems, which should be as small as possible. Positioning the electric powered vehicle based on a global navigation system such as GPS (GPS = Global Positioning System), Galileo or Glonass close to the road based or parking lot based inductive coil system only has an accuracy in a range of ten to twenty meters. The accuracy of the positioning can be increased to accuracy in a range of centimeters by applying RFID systems with accurately chosen and known positions of the RFID readers.

For conserving resources, the road based or parking lot based inductive coil system should only be activated and powered, when one of the electric powered vehicles is located within a predefined range to the road based or parking lot based inductive coil system. Therefore, an RFID reader communicates with an RFID tag to get knowledge, when an electric powered vehicle is located within the predefined range and preferably which electric powered vehicle is located within the predefined range.

US 2006/0197652 A1 describes a radio frequency identification system and method, which includes at least one RFID reader to read at least one RFID tag, a sensor for determining a proximity parameter for the at least one tag with respect to the at least one reader and a controller that controls the RF power of the at least one reader.

r This prior art is acknowledged in the preamble of claims 1 and 11 US 2009/0309704 A1 describes methods, systems and apparatuses for managing power consumed by an RFID reader. The methods, systems and apparatuses can include controlling RFID reader power levels by detecting proximity to an RFID tagged object and by motion detection of RFID readers and tags with internal and/or external sensor modules.

### SUMMARY

Conserving energy resources is a more and more becoming critical issue in every technical solution for saving money and for reducing carbon footprint. Thus, one object of the embodiments of the invention is to reduce energy consumption of road based or parking lot based inductive coil systems.

The object is achieved by a method for controlling a read-out of a radio frequency identification unit. The method contains the step of determining propagation information of the movable apparatus, which contains the radio frequency identification unit or a radio frequency identification reader. The method further contains the step of adapting based on the propagation information an output power of the radio frequency identification reader for reading out the radio frequency identification unit. The propagation information contains information of a current speed of the movable apparatus. A first output power value correlates to a first speed range or a first speed value, and at least a second output power value larger than the first output power value correlates to at least a second speed range or at least a second speed value with at least one speed value larger than a speed value of the first speed range or the first speed value.

The output power may be for example a power value of an alternating voltage for an inductive coupling between the radio frequency identification reader and the radio frequency identification unit. According to a preferred alternative, the output power may be a transmit power value of a radio frequency transmission from the radio frequency identification reader to the radio frequency identification unit.

In a preferred embodiment, the movable apparatus may be a vehicle such as a car, a lorry, a bus or a motorbike and in particular an electric powered vehicle. According to further alternatives, the movable apparatus may be a transport container such as a suitcase or a parcel.

The object is further achieved by an apparatus for controlling a read out of a radio frequency identification unit. The apparatus for controlling the read out of the radio frequency identification unit may be for example the radio frequency identification reader or a control unit for a radio frequency identification system. In a preferred embodiment, the radio frequency identification system may contain the apparatus for controlling the read out of the radio frequency identification unit and a wireless energy supply system may contain the radio frequency identification system. According to an alternative embodiment, the movable apparatus may contain the apparatus for controlling the read out of the radio frequency identification unit.

The apparatus contains means for determining propagation information of a movable apparatus, which contains the radio frequency identification unit or a radio frequency identification reader. In embodiments, the means for determining the propagation information may correspond to any determination unit, which collects propagation information from measurement systems such as velocity sensors or pattern recognition systems for measuring propagation characteristics of the movable apparatus such as speed or type of the movable apparatus.

In further embodiments, the determination unit may collect propagation information from a measurement system or directly from the movable apparatus. Hence, in embodiments, the means for determining may contain an input for the propagation information. In some embodiments the means for determining can be implemented in terms of a computer program and a hardware component on which the computer program is executed, such as a DSP (DSP = Digital Signal Processor) or any other processor.

The apparatus further contains means for adapting based on the propagation information the output power of the radio frequency identification reader for reading out the radio frequency identification unit. In embodiments, the means for adapting the transmit power may correspond to any adaptation unit, such as an output power controller. Hence, in embodiments, the means for adapting the output power may contain an input for the propagation information, an algorithmic unit for performing the adaptation of the output power according to the propagation information, a memory having storage space for performing the adaptation, and an output for control signals for controlling the output power. In some embodiments the means for adapting can be implemented in terms of a computer program and a hardware component on which the computer program is executed, such as a DSP or any other processor.

The embodiments of the invention provide a first benefit of increasing a positioning of the movable apparatus especially in case of slow movable apparatuses. When the transmit power is set to a fixed value and the fixed value is adapted to a maximum occurring velocity of movable apparatuses for an application of a radio frequency identification system containing the radio frequency identification reader such as activating and deactivating timely and efficiently a road based inductive coil system for an inductive charging of electric powered vehicles, the road based inductive coil system would be activated too early and would be deactivated too lately in case of slow moving electric powered vehicle passing the road based inductive coil system. By increasing the positioning of slow movable apparatuses using reduced output power, the operation time of the road based inductive coil system can be set to a minimum value and OPEX (OPEX = Operational expenditure) including energy consumption can be reduced.

The embodiments of the invention provide a second benefit of enabling a positioning of fast movable apparatuses. When the transmit power is set to a fixed value and the fixed value may be adapted for example to a medium occurring velocity of the movable apparatuses for activating and deactivating timely and efficiently for example a road based inductive coil system for an inductive charging of electric powered vehicles, a fast electric powered vehicle may pass an interaction area for an electromagnetic interaction between the radio frequency identification reader and the radio frequency identification unit in such a short time, which is too small to activate the radio frequency identification unit and to transmit an identification message from the activated radio frequency identification unit to the radio frequency identification reader. By adapting the output power to a current speed of the movable apparatus, a residence time within the interaction area may be kept constant or within a predefined time range to allow for a reliable communication between the radio frequency identification reader and the radio frequency identification unit and a reliable identification of the radio frequency identification unit.

The current speed may be given for example in kilometers per hour or miles per hour. The first embodiment provides the possibility to adapt the output power according to the current speed of the movable apparatus.

In a further preferred first embodiment, the output power may be set to the first output power value or the at least second output power value depending on a comparison of the current speed with the first speed range or the at least second speed range or with the first speed value or the at least second speed value. This provides the benefit of applying for example a simple look-up table with two or more entries for the speed ranges or speed values and the output power values. No time consuming calculation by using a mathematical equation is required in such a case.

In a second embodiment, the positioning information may further contain further information of a distance and preferably of a shortest distance between an oscillating element for an alternating current connected to the radio frequency identification reader and the radio frequency identification unit. The shortest distance may be a shortest possible distance, which can be achieved, when the oscillating element and the radio identification unit pass each other. Therefore, the first output power value may further correlate to a first distance range or to a first distance value, and the at least second output power value larger may correlate to at least a second distance range different to the first distance range or to at least a second distance value different to the first distance value. The further information may be for example type information of the movable apparatus such as model and year of construction. According to an alternative, the further information may be a distance value in centimeter or millimeter. The further embodiment provides the advantage to further enhance a positioning of the movable apparatus by considering the fact, that different types of movable apparatuses contain the radio frequency identification unit or the radio frequency identification reader for example in different vertical height levels with respect to a track unit such as a road.

Preferably, the output power may be set to the first output power value or the at least fourth output power value depending on a comparison of the current distance with the first distance range or the at least second distance range or with the first distance value or the at least second distance value. This provides the benefit - similar as mentioned above for the current velocity of the movable apparatus - of applying for example a simple look-up table with two or more entries for the distance ranges or distance values and the output power values. No time consuming calculation by using a mathematical equation is required in such a case.

According to a further embodiment, the movable apparatus may contain the radio frequency identification unit, a radio frequency identification system may contain the radio frequency identification reader, the method may further contain the step of transmitting the propagation information via a wireless connection from the movable apparatus to the radio frequency identification system and/or the step of measuring the movable apparatus by a stationary measurement system for obtaining the propagation information. The measuring step may contain for example a speed measurement for the movable apparatus and/or pattern recognition for the movable apparatus. The further embodiment allows providing propagation information to the apparatus for controlling the readout of the radio frequency identification unit, when the radio frequency identification unit is located in the movable apparatus. By applying both steps -transmitting the propagation information via the wireless connection and measuring the movable apparatus by the stationary measurement system - at a same time, an accuracy of the propagation information may be increased.

According to a further preferred embodiment, a track of the movable apparatus may contain within a predefined length of the track a predefined number of oscillating elements for the electromagnetic current, and wherein the adapting step contains an adaptation of the output power provided to the predefined number of oscillating elements. An oscillating element for the electromagnetic current may be for example an antenna element or an antenna system containing several antenna elements for a transmission and reception of radio frequency signals or a coil or a coil system containing several coils for an inductive coupling. This embodiment provides the advantage of adapting the output power at several oscillating elements at a same time for example by a central control apparatus without requiring implementing the method in a distributed way at each oscillating element.

Preferably, the predefined number of oscillating elements and/or the predefined length of the track may be adapted to an average speed value of movable apparatuses. For example, if the average speed value of the movable apparatuses is below a predefined speed value, the predefined length of the track may be set to a first length value and if the average speed value of the movable apparatus is equal to or above the predefined speed value, the predefined length of the track may be set to a second length value, which is larger than the first length value. This provides the benefit of grouping the oscillating elements depended on the average speed value of the movable apparatuses.

Further embodiments provide a computer program having a program code for performing one of the above methods when the computer program is executed on a computer or processor.

Further advantageous features of the embodiments of the invention are defined and are described in the following detailed description.

## BRIEF DESCRIPTION OF THE FIGURES

The embodiments of the invention will become apparent in the following detailed description and will be illustrated by accompanying figures given by way of non-limiting illustrations.

Figure 1 shows schematically a block diagram of a road based wireless energy supply system for electric powered vehicles according to an embodiment of the invention.

Figure 2 shows schematically two image sections of the block diagram of Figure 1 with respect to an electric powered vehicle, which moves with two different velocities.

Figure 3 shows schematically two image sections of the block diagram of Figure 1 with respect to a first type and a second type of electric powered vehicles.

Figure 4 shows schematically a flow diagram of a method according to the embodiments of the invention.

Figure 5 shows schematically a block diagram of a control apparatus according to the embodiments of the invention.

## DESCRIPTION OF THE EMBODIMENTS

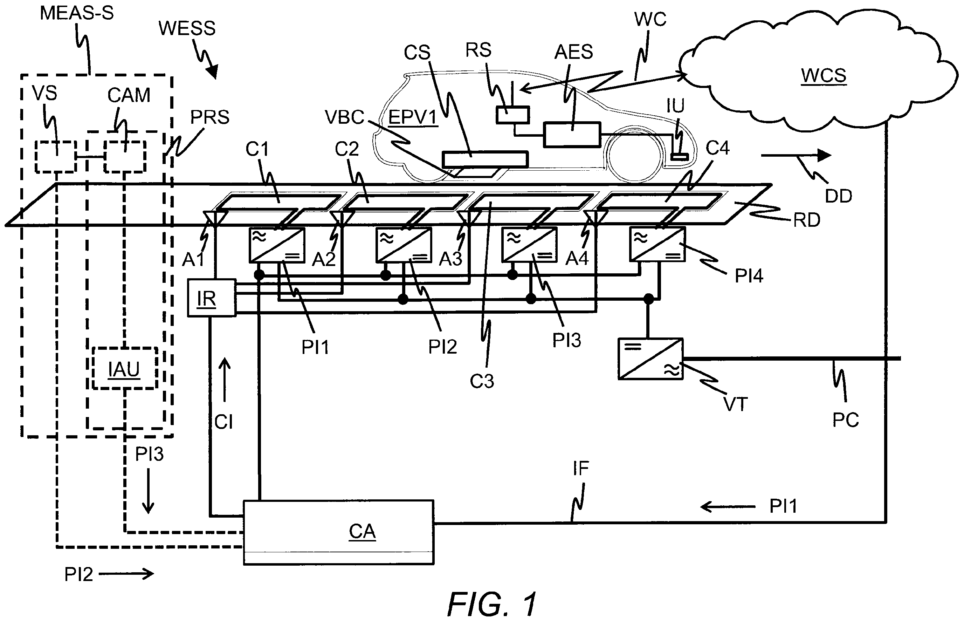

Figure 1 shows schematically a block diagram of a wireless energy supply system WESS for providing electrical power to an electric powered vehicle EPV1. The electric powered vehicle EPV1 may be for example a car, a lorry, a bus or a motorbike.

The wireless energy supply system WESS exemplarily contains four coils C1, C2, C3, C4 for providing electrical energy by an inductive transmission method to a charging unit CU of the electric powered vehicle EPV1, four power inverters PI1, PI2, PI3, PI4 each connected to one of the four coils C1, C2, C3, C4, a voltage transformer VT connected to the four power inverters PI1, PI2, PI3, PI4, a control apparatus CA connected to the four power inverters PI1, PI2, PI3, PI4 and a radio frequency identification system for a predefined section of a road RD. The predefined section may have a length of several ten or hundred meters. In further alternatives, the wireless energy supply system WESS may contain more or less than four coils and power inverters within the predefined section of the road RD.

The electric powered vehicle EPV1 contains exemplarily a charging system CS, a vehicle based coil VBC, an automotive electronic system AES, a radio station RS, and a radio frequency identification unit IU such as an RFID tag. Further components of the electric powered vehicle EPV1 are not shown in Figure 1 for simplification. The charging system CS may contain for example a rechargeable battery and an energy management system.

The radio frequency identification system contains exemplarily four oscillating elements for an alternating current A1, A2, A3, A4 (e.g. one oscillating element for each one of the four coils C1, C2, C3 C4), a radio frequency identification reader IR and the control apparatus CA. This means, that the control apparatus according to Figure 1 contains functionality for controlling the wireless energy supply system WESS and for controlling the radio frequency identification system. According an alternative embodiment, a further control unit may be applied for controlling the wireless energy supply system WESS and the control apparatus CA may be only applied for controlling the radio frequency identification system.

The term "radio frequency identification reader" may refer to any wireless reader unit such as a so-called RFID reader or a so-called RFID interrogator for obtaining an identification number from the radio frequency identification unit IU.

Each one of oscillating elements for the alternating current A1, A2, A3, A4 may be an antenna or an antenna system comprising several antenna elements, when a radio frequency identification unit IU is read out by a transmission and reception of radio frequency signals or may be a coil, when the radio frequency identification unit IU is read out by an inductive coupling between two or more coils.

The term "radio frequency identification unit" may refer to any wireless transponder unit such as a so-called RFID tag, which contains electronically stored information which can be read wirelessly from up to several meters away.

Preferably, the control apparatus CA adapts the output power at the radio frequency identification reader IR simultaneously for all oscillating elements for the alternating current A1, A2, A3 A4 within the predefined section of the road RD. In a further preferred embodiment, the length of the predefined section controlled by a same control apparatus CA may be adapted to an average speed value of electric powered vehicles. For a first average speed value a first length may be selected and for at least a second average speed value larger than the first average speed value at least a second length larger than the first length may be selected. The first length and the at least second length may be determined based on test runs of electric powered vehicles, varying number of oscillating elements for the alternating current, and varying length of sections contain the varying number of oscillating elements for the alternating current.

The voltage transformer VT is electrically contacted by a power connection PC to an external voltage source, which is not shown in Figure 1 for simplification. The voltage transformer VT converts a first AC voltage into DC voltage, which is supplied to the power converters PI1, PI2, PI3, PI4. The power converters PI1, PI2, PI3, PI4 convert the DC voltage into a second AC voltage with a predefined frequency such as 40 kHz. The second AC voltage is supplied to the coils C1, C2, C3, C4. The coils C1, C2, C3, C4 may be embedded in series in a roadbed of the road RD. A first coil C1 may be electrically contacted to a first power inverter PI1, a second coil C2 in driving direction DD after the first coil C1 may be electrically contacted to a second power inverter PI2, a third coil C3 in the driving direction DD after the second coil C2 may be electrically contacted to a third power inverter PI3 and a fourth coil C4 in the driving direction DD after the third coil C3 may be electrically contacted to a fourth power inverter PI4.

When the second AC voltage is applied to one of the coils C1, C2, C3, C4 an electromagnetic field is generated within the corresponding coil. The electromagnetic field induces a further electromagnetic field in the vehicle based coil VBC, when the electric powered vehicle EPV1 passes the corresponding coil. The further electromagnetic field provides a third AC voltage, which is provided to the charging system CS. The charging system CS converts the third AC voltage into a further DC voltage for charging the rechargeable battery of the electric powered vehicle EPV1. Such a wireless charging process is known to persons skilled in the art and therefore no further details are given for simplification.

The power inverters PI1, PI2, PI3, PI4 are further connected to the operations control system OCS. The operations control system OCS may be able to transmit control signals to the power inverters PI1, PI2, PI3, PI4 for selectively switching on and off the electrical power, which is supplied by the power inverters PI1, PI2, PI3, PI4 to the coils C1, C2, C3, C4. Usually the electrical power is only switched on for those coils, above which an electric powered vehicle is located. With respect to a current position of the electric powered vehicle EPV1 shown in Figure 1, the electrical power for the second coil C2 is going to be switched off by the operations control system OCS and the electrical power for the third coil C3 is going to be switched on by the operations control system OCS.

The oscillating elements for the alternating current A1, A2, A3, A4 may be also implemented in series in the roadbed of the road RD. A first oscillating element for the alternating current A1 may be located in the driving direction DD at the beginning of the first coil C1, a second oscillating element for the alternating current A2 may be located in the driving direction DD at the beginning of the second coil C2, a third oscillating element for the alternating current A3 may be located in the driving direction DD at the beginning of the third coil C3, and a fourth oscillating element for the alternating current A4 may be located in the driving direction DD at the beginning of the fourth coil C4. The oscillating elements for the alternating current A1, A2, A3, A4 may be laterally shifted with respect to the coils C1, C2, C3, C4 as shown in Figure 1. In a further alternative, the oscillating elements for the alternating current A1, A2, A3, A4 may be located centrally in driving direction DD in front of corresponding coils C1, C2, C3, C4 (e.g. the second oscillating element for the alternating current A2 may be located in a space between the first coil C1 and the second coil C2). In an even further alternative with nearly no spacing between the coils C1, C2, C3, C4, the first oscillating element for the alternating current A1 may be located centrally in the driving direction DD in front of the first coil C1, the second oscillating element for the alternating current A2 may be located centrally within a coil turn of the first coil C1, the third oscillating element for the alternating current A3 may be located centrally within a coil turn of the second coil C2, and the fourth oscillating element for the alternating current A4 may be located centrally within a coil turn of the third coil C3.

The oscillating elements for the alternating current A1, A2, A3, A4 are preferably electrically contacted to the radio frequency identification reader IR as a single radio frequency identification reader IR . According to further alternatives, less than four oscillating elements for the alternating current or more than four oscillating elements for the alternating current may be electrically contacted to the radio frequency identification reader IR.

The radio frequency identification reader IR applies electromagnetic signals to the oscillating elements for the alternating current A1, A2, A3, A4 for a radio frequency transmission or an inductive coupling towards the radio frequency identification unit IU. In case of the radio frequency transmission, the radio frequency transmission from one of the antennas A1, A2, A3, A4 is received by an antenna of the radio frequency identification unit IU. Some portion of energy of the radio frequency transmission is absorbed by the radio frequency identification unit IU for an activation of the radio frequency identification unit IU and for a further radio frequency transmission from the antenna of the radio frequency identification unit IU to a corresponding antenna A1, A2, A3, A4. The further radio frequency transmission includes an identification number such as a so-called tag ID, which may consist of 128 bits for example. In case of the inductive coupling, the inductive coupling via one of the coils A1, A2, A3, A3, an electromagnetic field is induced in a coil of the radio frequency identification unit IU. The induced electromagnetic field is applied for the activation of the radio frequency identification unit IU and for the communication of the identification number from the radio frequency identification unit IU to the radio frequency identification reader IR.

The radio frequency identification reader IR is connected to the control apparatus CA. According to further alternatives, two or more radio frequency identification readers may be connected to the control apparatus CA for controlling further oscillating elements for the alternating current. The radio frequency identification reader IR for example may provide to the control apparatus CA a signal message, which contains information of an identification number of the radio frequency identification unit IU and of an identification number of one of the oscillating elements for the alternating current A1, A1, A3, A4. A database, which may be stored for example at the control apparatus CA, may provide a mapping between the each one of the oscillating elements for the alternating current A1, A1, A3, A4 and a corresponding one of the coils C1, C2, C3, C4. This information is used by the control apparatus CA to get knowledge, which electric powered vehicle is located near which one of the coils C1, C2, C3, C4. The knowledge is used to switch on the electric power preferably only at one or several of the power inverters PI1, PI2, PI3, PI4, where an electric powered vehicle is located near a corresponding coil (e.g. the third coil C3 in Figure 1) and switch off the electric power preferably at a further one or further several of the power inverters PI1, PI2, PI3, PI4, where an electric powered vehicle has left a corresponding coil.

The control apparatus CA further contains means for determining propagation information of the electric powered vehicle EPV1. There are several options for determining the propagation information.

According to a first embodiment as shown in Figure 1, the control apparatus CA may contain an interface IF to an external wireless communication system WCS. The wireless communication system WCS may be for example a cellular mobile network based on known radio communication standard such as LTE or LTE Advanced (LTE = Long Term Evolution), UMTS (UMTS = Universal Mobile Telecommunication Systems), CDMA2000, WiMAX (WiMAX = Worldwide Interoperability for Microwave Access), or WLAN (WLAN = Wireless Local Area Network) as specified by IEEE 802.11 (IEEE = Institute of Electrical and Electronics Engineers).

In an alternative embodiment, the wireless communication system WCS may be an integral part of the wireless energy supply system WESS. In such a case, small base stations such as so-called femto-cells or pico-cells may be located with a predefined distance along the road RD and each one of the small base stations may be directly connected to the control apparatus CA.

The wireless communication system WCS may provide a wireless connection WC to the radio station RS within the electric powered vehicle EPV1. The radio station RS may be for example a so-called femtocell, which provides wireless connectivity to passengers of the electric powered vehicle EPV1 . In further alternatives, the radio station RS may be a radio transmitter or a radio transceiver.

The radio station RS may be connected to the automotive electronic system AES. The automotive electronic system AES may connect for example sensors with control units within the electric powered vehicle EPV1. The automotive electronic system AES may provide for example periodically (e.g. with a period of 1 second or 5 seconds) a current speed value of a current velocity as first propagation information PI1 of the electric powered vehicle EPV1 to the radio station RS, which transmits the first propagation information PI1 to the wireless communication system WCS and the wireless communication system WCS forwards the first propagation information PI1 to the control apparatus CA and may be to further control apparatuses for example within a coverage area of a radio cell at which the current speed value has been received. Therefore, a network node of the wireless communication system WCS may apply a look up table with mappings between radio cells and control apparatuses.

Preferably, the radio frequency identification unit IU may be also connected to the automotive electronic system AES and the automotive electronic system AES may request the identification number from the radio frequency identification unit IU. In such a case, the identification number may be preferably also provided periodically as part of the first propagation information PI1 to the radio station RS, also transmitted from the radio station RS via the wireless connection WC to the wireless communication system WCS, and also forwarded from the wireless communication system WCS to the control apparatus CA and may be to the further control apparatuses.

According to a further preferred embodiment, the automotive electronic system AES may further provide periodically first positioning information of the radio frequency identification unit IU as part of the first propagation information PI1 to the radio station RS. The first positioning information may correlate to a location of the radio frequency identification unit IU within or at the electric powered vehicle EPV1. A location of the frequency identification unit IU within or at the electric powered vehicle EPV1 and more precisely a shortest distance between one of the oscillating elements for the alternating current A1, A2, A3, A4 as an integral part of the road RD and the radio frequency identification unit IU may strongly depend on a model of the electric powered vehicle, because the manufacturers of the electric powered vehicles may place the radio frequency identification unit IU at different positions within or at a specific model of the electric powered vehicle. When the radio frequency identification unit IU is placed for example at a vehicle floor, the vertical distance between one of the oscillating elements for the alternating current A1, A2, A3, A4 and the vehicle floor will be larger for SUVs (SUV = Sport Utility Vehicle) or jeeps than for usual compact cars such as Volkswagen Golf or Ford Focus. The first positioning information may contain for example information of a type of an electric powered vehicle (e.g. model and year of construction) and/or a distance value for the shortest distance between one of the oscillating elements for the alternating current A1, A2, A3, A4 and the radio frequency identification unit UI. The first positioning information may be further transmitted as part of the first propagation information PI1 via the wireless connection WC to the wireless communication system WCS and the wireless communication system WCS may forward the first positioning information to the control apparatus CA and may be to the further control apparatuses.

According to an even further preferred embodiment, the electric powered vehicle EPV1 may further contain a receiver of a global satellite positioning system such as GPS (GPS = Global Positioning System), Galileo or Glonass. The receiver may be connected to the automotive electronic system AES. In such a case, second positioning information with geographic coordinates of the electric powered vehicle EPV1 may be preferably also provided periodically as part of the first propagation information PI1 to the radio station RS, also transmitted from the radio station RS via the wireless connection WC to the wireless communication system WCS, and also forwarded from the wireless communication system WCS preferably only to the control apparatus CA. Due to the geographic coordinates of the electric powered vehicle EPV1 and a further look-up table with mappings between geographic coordinates and control apparatuses, the network node of the wireless communication system WCS may be able to select the control apparatus CA as a single control unit responsible for a current location of the electric powered vehicle EPV1 and therefore may forward the first propagation information PI1 only to the control apparatus CA.

Instead of using the wireless connection WC or in addition to the use of the wireless connection WC, second propagation information PI2 and/or third propagation information PI3 may be determined by a measurement system MEAS-S, which may be connected to the wireless energy supply system WESS or which may be part of the wireless energy supply system WESS.

The measurement system MEAS-S may contain for example a VS and/or a pattern recognition system PRS (see Figure 1).

The current velocity of the electric powered vehicle EPV1 may be measured for example by the velocity sensor CS, which is located in the driving direction DD with a predefined distance in front of the coils C1, C2, C3, C4. The velocity sensor VS may be for example a laser measuring device.

The predefined distance depends on a maximum possible velocity of electric powered vehicles, a first time duration for performing a measurement of the velocity, a second time duration for providing the second propagation information PI2 from the velocity sensor VS to the control apparatus CA, a third time duration for a determination and adaptation of an output power for the radio frequency identification reader IR, a fourth time duration for providing control information CI from the control apparatus CA to the radio frequency identification reader IR and a fifth time duration for a change and adaptation of the output power at the radio frequency identification reader IR correspondent to the control information CI received from the control apparatus CA. The control information CI may contain for example an absolute value for the output power of the radio frequency identification reader IR or an incremental value for a specific change of the output power of the radio frequency identification reader IR.

The laser measuring device may perform for example a measurement based on the so-called Doppler effect or may perform a propagation time measurement for the electric powered vehicle EPV1 between two laser beams, which may have a first predefined distance. Alternatively, the velocity of the electric powered vehicle EPV1 may be measured by a propagation time measurement for the electric powered vehicle between two induction loops, which may have a second predefined distance and which may be embedded in the roadbed of the road RD. Such measurement procedures are known to person skilled in the art and are therefore not described in more detail.

The distance between the one of the oscillating elements for the alternating current A1, A2, A3, A4 and the radio frequency identification unit IU may be determined for example by applying a pattern recognition system PRS, which may contain a high-speed camera CAM and an image analyzing unit IAU. The high-speed camera CAM may be triggered by the velocity sensor VS for taking a photograph of the electric powered vehicle EPV1. The photograph may be provided to the image analyzing unit IAU, which may be an external unit as shown in Figure 1 or may be integrated to the high-speed camera CAM. The image analyzing unit IAU may contain a repository of images for all types of electric powered vehicles and a computer program product. The computer program product may contain an image analyzer and a search engine. The image analyzer may be for analyzing the photograph and for determining recognition features by the analysis. The search engine will apply the recognition features and will compare the recognition features of the photograph with recognition features of the types of electric powered vehicles stored in the repository. Preferably, the repository of images may further store distance values between one of the oscillating elements for the alternating current A1, A2, A3, A4 and the radio frequency identification unit IU for each type of electric powered vehicle. When the electric powered vehicle EPV1 has been identified by the pattern recognition system PRS, the type of the electric powered vehicle EPV1 and/or preferably the distance value may be provided as third propagation information PI3 from the pattern recognition system PRS to the control apparatus CA.

According to an alternative embodiment (not shown in the Figures), locations of the radio frequency identification unit IU, the radio frequency identification reader IR, the control apparatus CA and the oscillating elements for the alternating current may be exchanged between the electric powered vehicle EPV1 and the wireless energy supply system WESS. This means for the alternative embodiment, that the electric powered vehicle EPV1 may contain the control apparatus CA, the radio frequency identification reader IR and one of the oscillating elements for the alternating current A1, A2, A3, A3 and a first radio frequency identification unit may be located near the first coil C1, a second radio frequency identification unit may be located near the second coil C2, a third radio frequency identification unit may be located near the third coil C3 and a fourth radio frequency identification unit may be located near the fourth coil C4. In such a case, the control apparatus CA may obtain for example the current speed value from the automotive electronic system AES. Each time one of the radio frequency identification units is activated by the passing electric powered vehicle EPV1, the one of the radio frequency identification units may be configured to transmit via a cable connection a control signal to the control unit of the wireless energy supply system WESS, which immediately switches on electrical power of a corresponding one of the power inverters PI1, PI2, PI3, PI4. Alternatively, the electric powered vehicle EPV1 may transmit via the wireless connection WC an identification number of a corresponding one of the radio frequency identification units to the control unit for switching on the electrical power of the corresponding one of the power inverters PI1, PI2, PI3, PI4.

The control apparatus CA may be a control unit for controlling the radio frequency identification system and for controlling the wireless energy supply system WESS (see Figure 1). In an alternative embodiments (not shown in the Figures), the control apparatus CA may be the radio frequency identification reader IR and the measurement system MEAS-S may be connected to the radio frequency identification reader IR instead of the connection to the control unit for controlling the wireless energy supply system WESS. In such a case the control unit for controlling the wireless energy supply system WESS may not contain the functionality for determining the propagation information of the electric powered vehicle EPV1 and for adapting the output power of the radio frequency identification reader IR.

The control apparatus CA is responsible for adapting at the radio frequency identification reader IR the output power of the electromagnetic field, which is applied to the oscillating elements for the alternating current A1, A2, A3, A4. The adaptation of the output power such as the transmit power or the power value of the alternating voltage may be done for example in a following way:

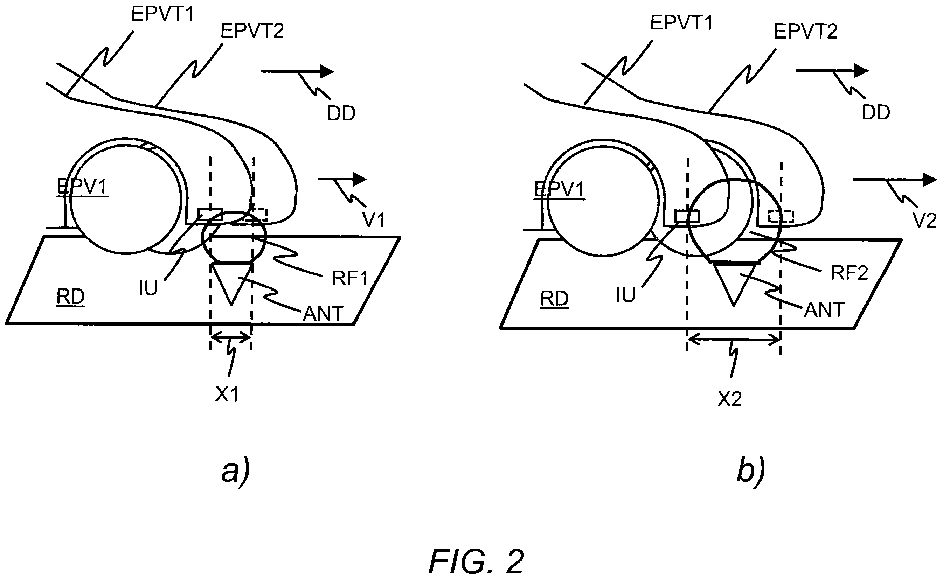

Before the electric powered vehicle EPV1 arrives in a first coverage area or interaction area RF1 of an oscillating element for the alternating current ANT, which may be one of the oscillating elements for the alternating current A1, A2, A3, A4 (see Figure 2 a)), the first propagation information PI1 and/or the second propagation information PI2 containing a value of a first velocity $V_1$ of the electric powered vehicle EPV1 is provided to the control apparatus CA (see Figure 1). If two values of the first velocity $V_1$ as part of the first propagation information PI1 and the second propagation information PI2 are received at the control apparatus CA, the control apparatus CA may determine an average value or may select one of the two values, which has a higher reliability. Then, the control apparatus CA applies a selected value of the velocity $V_i$ for determining an output power value $P_{out,i}$ of the radio frequency identification reader IR for example by following general linear equation:

$$P_{out,i} = a \cdot V_i \qquad (1)$$

with $a$: parameter, which may be for example derived by executing test runs of the electric powered vehicle EPV1 with different velocities and different output power values, by selecting a best suitable output power for each velocity and by performing a linear fit to a plot of the experimental results.

The best suitable output power may be for example a minimum output power for a specific velocity, which provides a sufficient large coverage area RF1 that the radio frequency identification unit IU, which passes the first coverage area RF1 over a first length $X1$ with the first velocity $V_1$ of the electric powered vehicle can be activated and respond within a time range $\Delta T$, that is given by a first point of time $EPVT1$, when the radio frequency identification unit IU enters the first coverage area RF1 and a second point of time $EPVT2$, when the radio frequency identification unit IU leaves the coverage area RF1. A relationship between a current velocity $V_i$, a length $X_i$ and the time range $\Delta T$ is given by following general equation:

$$X_i = V_i \cdot \Delta T = V_i \cdot (EPVT2 - EPVT1) \qquad (2)$$

A first output power value $P_{out,1}$ may be determined by equation (1) for the first velocity $V_1$ and may be transmitted as part of the control information CI from the control apparatus CA to the radio frequency identification reader IR. Such a transmission is not required, if the control apparatus CA is the radio frequency identification reader IR.

As an alternative, instead of the linear equation (1) a quadratic equation may be applied for determining the output power value of the radio frequency identification reader IR, which is not described in further detail because a skilled person will able to extend the described method to the quadratic equation similar as described for the linear equation.

Figure 2 b) shows an extract of the Figure 1, when the electric powered vehicle EPV1 moves with a second velocity $V_2$, which is higher than the first velocity $V_1$. In such a case, the electric powered vehicle EPV1 would pass the first coverage area RF1 shown in Figure 2 a) in a shorter time, which would be too short for activating the radio frequency identification unit IU and for receiving a response from the radio frequency identification unit IU at the antenna ANT. Therefore, a second output value $P_{out,2}$ is calculated for adapting the output power at the radio frequency identification reader IR, which provides by the oscillating element for the alternating current ANT a second coverage area RF2, which is larger than the first coverage area RF1.

In an alternative instead of the equation (1) a first look-up table may be applied for determining the output power value to be adapted at the radio frequency identification reader IR. The first look-up table may be for example generated by executing test runs as described above for the parameter $a$ of equation (1). The first look-up table may contain a mapping with a first column for two or more velocity ranges or for two or more velocity values and in a second column for two or more output power values. For a current velocity value it is verified in which velocity range the current velocity value is located or to which velocity value a smallest difference exits. Then, a corresponding output power value may be determined or selected and provided as the control information CI to the radio frequency identification reader IR.

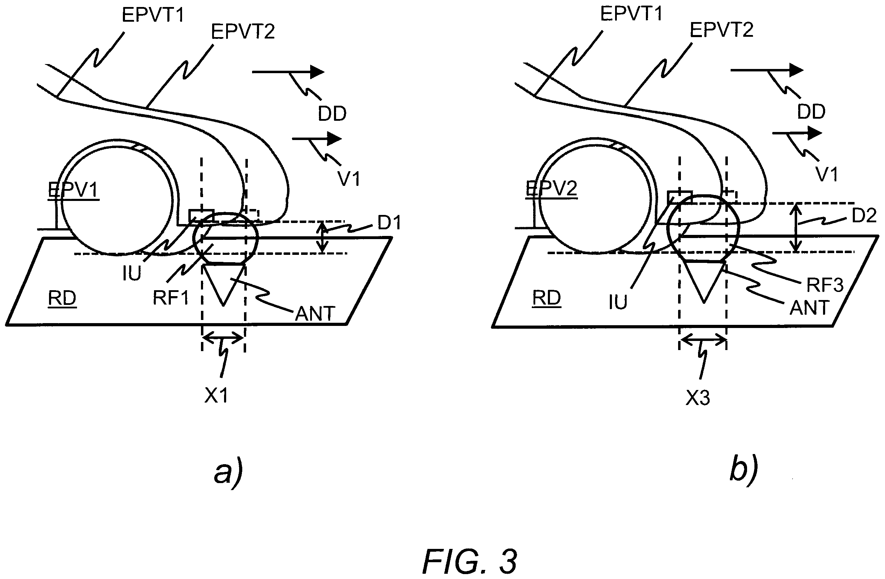

Figure 3 a) and Figure 3 b) show two different types of electric powered vehicles EPV1, EPV2. Both, the electric powered vehicle EPV1 and the electric powered vehicle EPV2 may move with the same first velocity $V_1$. According to Figure 3 a), the radio frequency identification unit IU is located near an underbody of the electric powered vehicle EPV1. According to Figure 3 b), the radio frequency identification unit IU is located exemplarily in a motor compartment of the electric powered vehicle EPV2. Therefore, a distance D1 between the radio frequency identification unit IU of the electric powered vehicle EPV1 and one of the oscillating elements for the alternating current A1, A2, A3, A4 is smaller than a vertical distance D2 between the radio frequency identification unit IU of the electric powered vehicle EPV2 and the one of the oscillating elements for the alternating current A1, A2, A3, A4. Different vertical distances also occur even if the radio frequency identification unit IU is always located near the underbody of the electric powered vehicle, because electric powered vehicles in a form of SUVs will have a larger clearance height or ride height than electric powered vehicles in a form of compact cars. In such a case, the electric powered vehicle EPV2 would pass the first coverage area RF1 shown in Figure 3 a) in a shorter time, which would be too short for activating the radio frequency identification unit IU and for receiving a response from the radio frequency identification unit IU at the oscillating element for the alternating current ANT. Therefore, a third output value $P_{out,3}$ may be determined for an adaptation of the output power at the radio frequency identification reader IR, which provides a third coverage area RF3 by the oscillating element for the alternating current ANT, which is larger than the first coverage area RF1.

The control apparatus CA may apply a selected value of the velocity $V_i$ and a distance value $D_i$ for determining an output power value $P_{out,i}$ to be adapted at the radio frequency identification reader IR for example by following general linear equation:

$$P_{out,i} = b \cdot V_i + c \cdot D_i \qquad (3)$$

with $b$, C: parameters, which may be for example derived by executing test runs of the electric powered vehicle EPV1 with different velocities, with different vertical distances and with different output power values, by selecting a best suitable output power for each velocity and for each vertical distance and by performing a linear fit to a plot of the experimental results.

Instead of the equation (3) a second look-up table may be applied similar to the first look-up table as described above. In such a case, the second look-up table may contain a mapping with a further column for two or more distance ranges or two or more distance values. In an alternative, the second look-up table may not contain the column for different velocity values or the equation (3) may not contain the velocity term $V_i$, if for example the velocity is identical for all movable apparatuses and only the vertical distance changes from a first movable apparatus to a second movable apparatus (see embodiment described below for parcel or suitcase delivery systems).

For the embodiment of Figure 3, the control apparatus CA may further contain a mapping table between different types of the electric powered vehicle EPV1 and corresponding different distance values for a distance between the one of the oscillating elements for the alternating current A1, A2, A3, A4 and the radio frequency identification unit IU. This mapping table may be applied before the control apparatus CA applies the equation (3) or the second look-up table.

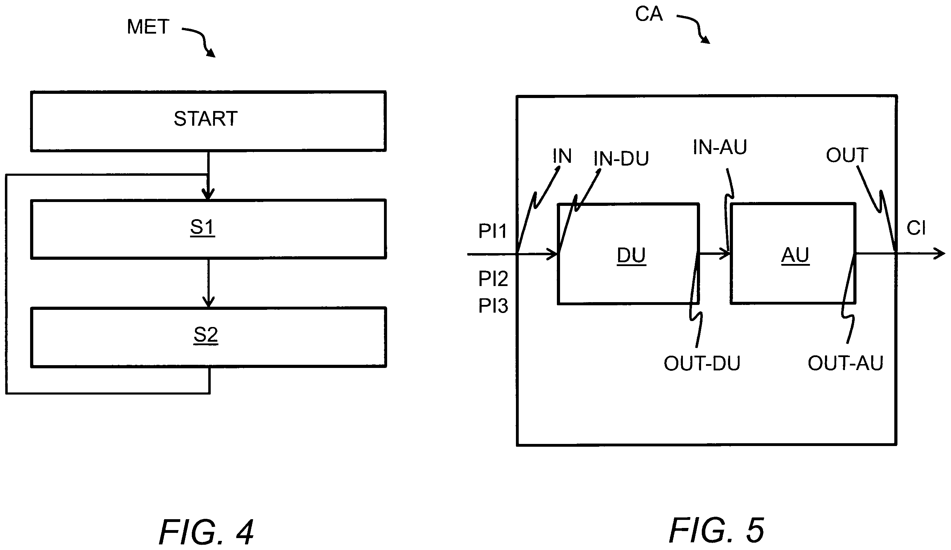

Referring to Figure 4, an exemplarily flow diagram of a method MET in accordance to a preferred embodiment of the invention is shown. The number of the steps for performing the method MET is not critical, and as can be understood by those skilled in the art, that the number of the steps may vary without departing from the scope of the embodiments of the invention as defined in the appended claims.

When the method MET has started, in a first step S1, the control apparatus CA determines as described above the first propagation information PI1 and/or the second propagation information PI2 and/or the third propagation information PI3 of the electric powered vehicle EPV1, EPV2.

In a second step S2, the control apparatus CA adapts as described above the output power of the radio frequency identification reader IR based on the first propagation information PI1 and/or the second propagation information PI2 and/or the third propagation information PI3 for reading out the radio frequency identification unit IU.

The method MET is repeated by the control apparatus CA each time an electric powered vehicle drives towards one of the oscillating elements for the alternating current A1, A2, A3, A4.

Referring to Figure 5, an exemplarily block diagram of the control apparatus CA in accordance to a preferred embodiment is shown. The control apparatus CA exemplarily contains an input IN for the first propagation information PI1 and/or the second propagation information PI2 and/or the third propagation information PI3. The control apparatus CA further contains a determination unit DU, an adaptation unit AU and an output for the control information CI.

The determination unit DU may collect the second propagation information PI2 and/or the third propagation information PI3 via an input IN-DU from measurement systems such as the velocity sensor VS or the pattern recognition system PRS for measuring propagation characteristics of the movable apparatus such as speed or type of the electric powered vehicle EPV1, EPV2. In further embodiments, the determination unit DU may further collect or instead of the second propagation information PI2 and/or the third propagation information PI3 the first propagation information PI1 via the input IN-DU from the electric powered vehicle EPV1 for example via the wireless communication system WCS. When the determination unit DU may receive a first value of the current velocity of the electric powered vehicle EPV1, EPV2 via the wireless communication system WCS and a second value of the current velocity of the electric powered vehicle EPV1, EPV2 via the velocity sensor VS, the determination unit DU may determine an average velocity value or may select one of the first value or the second value, which is more reliable. The determination unit DU provides for example the average velocity value to the output OUT-DU or simply forwards received propagation information PI1, PI2, PI3 to the output OUT-DU. In some embodiments the determination unit DU can be implemented in terms of a computer program and a hardware component on which the computer program is executed, such as a DSP or any other processor.

The adaptation unit AU may be for example an output power controller for the transmit power of the radio frequency transmission to the radio frequency identification unit IU. Hence, in embodiments, the adaptation unit AU may contain an input IN-AU for the propagation information PI1, PI2, PI3 or for propagation information preprocessed by the determination unit DU, an algorithmic unit for performing the adaptation of the output power based on the propagation information as described above, a memory having storage space for the look-up table, and an output OUT-AU for the control information CI for controlling and adapting the output power of the radio frequency identification reader IR. In some embodiments the adaptation unit AU can be implemented in terms of a computer program and a hardware component on which the computer program is executed, such as a DSP or any other processor.

Further embodiments provide a computer program having a program code for performing one of the above methods when the computer program is executed on a computer or processor.

The embodiments as described above are not limited to electric powered vehicles and wireless energy supply systems. In alternative embodiments, the movable apparatus may be for example a suitcase or a parcel to which the radio frequency identification unit is attached and the track may be for example a parcel delivery system in a building of a postal service or a suitcase delivery system in a building of an airport or harbor. Such delivery systems contain many branches and for each parcel or suitcase it has to be decided to which branch, the parcel or suitcase must be provided. The parcels or suitcases can be identified and localized by using the radio frequency identification unit attached to a parcel or suitcase. The parcels and suitcases must be localized with a sufficient accuracy, so that only a single parcel or suitcase is redirected to a specific branch. When the velocity of the delivery system is increased, the localization accuracy may decrease, when the output power of a radio frequency identification reader is not adapted to the velocity of the delivery system or to the distance between an oscillating element for the alternating current of the radio frequency identification reader and the radio frequency identification unit. Therefore, the adaptation of the output power of radio frequency identification readers is also suitable for parcel or suitcase delivery systems.

A person of skill in the art would readily recognize that steps of various above-described methods can be performed by programmed computers. Herein, some embodiments are also intended to cover program storage devices, e.g., digital data storage media, which are ma-chine or computer readable and encode machine-executable or computer-executable pro-grams of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the embodiments of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements of the control apparatus, which are shown in Figure 4b), including any functional blocks labeled as "means", "means for determining", "means for adapting", etc., may be provided through the use of dedicated hardware, such as "determination unit" , "adaptation unit", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method (MET) for controlling a readout of a radio frequency identification unit (IU), said method (MET) comprising the steps of:

   - determining (S1) propagation information (PI1, PI2, PI3) of a movable apparatus (EPV1, EPV2) either comprising said radio frequency identification unit (IU) or comprising a radio frequency identification reader (IR), and
   - adapting (S2) based on said propagation information (PI1, PI2, PI3) an output power of said radio frequency identification reader (IR) for reading out said radio frequency identification unit (IU), said propagation information (PI1, PI2) comprises speed information of a current speed (V1, V2) of said movable apparatus (EPV1, EPV2),

   **characterized in that** a first output power value correlates to a first speed range or a first speed value, and at least a second output power value larger than said first output power value correlates to at least a second speed range or at least a second speed value with at least one speed value larger than a speed value of said first speed range or said first speed value so that a residence time within an interaction area for an electromagnetic interaction between said radio frequency identification reader (IR) and said radio frequency identification unit (IU) is kept constant or within a predefined time range for allowing a reliable communication between said radio frequency identification reader (IR) and said radio frequency identification unit (IU) and a reliable identification of said radio frequency identification unit (IU).

2. Method (MET) according to claim 1, wherein said information (PI1, PI2, PI3) of said current speed (V1, V2) is determined by a velocity sensor (VS), by a propagation time measurement or by an automotive electronic system (AES).

3. Method (MET) according to claim 1 or claim 2, wherein said positioning information further comprises information of a distance (D1, D2) between an oscillating element for an alternating current (A1, A2, A3, A3) connected to said radio frequency identification reader (IR) and said radio frequency identification unit (IU), wherein said first output power value further correlates to a first distance range or a first distance value, and wherein said at least a second output power further correlates to at least a second distance range different to said first distance range or to at least a second distance value different to said first distance value.

4. Method (MET) according to claim 3, wherein said output power is set to said first output power value or said at least second output power value depending on a comparison of said distance (D1, D2) with said first distance range or said at least second distance range or with said first distance value or said at least second distance value.

5. Method (MET) according to claim 3, wherein said information (P1, P2, P3) of said distance (D1, D2) is determined by a pattern recognition system (CAM, IAU).

6. Method (MET) according to any of the preceding claims, wherein said movable apparatus (EPV1, EPV2) comprises said radio frequency identification unit (IU), wherein a radio frequency identification system (RFIDS) comprises said radio frequency identification reader (IR), wherein said determining step (S1) comprises the sub-step of transmitting said propagation information (PI1) via a wireless connection (WC) from said movable apparatus (EPV1, EPV2) to said radio frequency identification system and/or the sub-step of measuring said movable apparatus (EPV1, EPV2) by a measurement system (MEAS-S) for obtaining said propagation information (PI2, PI3).

7. Method (MET) according to claim 6, wherein said measuring sub-step comprises a speed measurement for said movable apparatus (EPV1, EPV2) and/or a pattern recognition for said movable apparatus (EPV1, EPV2).

8. Method (MET) according to claim 6 or claim 7, wherein a track (RD) of said movable apparatus (EPV1, EPV2) comprises within a predefined length of said track (RD) a predefined number of at least one oscillating element for an electromagnetic current (A1, A2, A3, A4) connected to said radio frequency identification reader (IR), and wherein said adapting step (S2) comprises an adaptation of said output power provided to said predefined number of said at least one oscillating element (A1, A2, A3, A4).

9. Method (MET) according to claim 8, wherein said predefined length of said track (RD) is adapted to an average speed value of movable apparatuses (EPV1, EPV2).

10. A computer program having a program code for performing one of the methods of any of the preceding claims, when the computer program is executed on a computer or processor.

11. An apparatus (CA) for controlling a readout of a radio frequency identification unit (IU), said apparatus (CA) comprising:

   - means (DU) for determining propagation information (PI1, PI2, PI3) including speed information of a current speed (V1, V2) of a movable apparatus (EPV1, EPV2) either comprising said identification unit (IU) or comprising a radio frequency identification reader (IR), and
   - means (AU) for adapting based on said propagation information (PI1, PI2, PI3) an output power of said radio frequency identification reader (IR) for reading out said radio frequency identification unit (IU),

   characterized in that a first output power value correlates to a first speed range or a first speed value, and at least a second output power value larger than said first output power value correlates to at least a second speed range or at least a second speed value with at least one speed value larger than a speed value of said first speed range or said first speed value so that a residence time within an interaction area for an electromagnetic interaction between said radio frequency identification reader (IR) and said radio frequency identification unit (IU) is kept constant or within a predefined time range for allowing a reliable communication between said radio frequency identification reader (IR) and said radio frequency identification unit (IU) and a reliable identification of said radio frequency identification unit (IU).

12. The apparatus (CA) according to claim 11, wherein said apparatus (CA) is said radio frequency identification reader (IR) or a control unit for controlling a radio frequency identification system.

13. A movable apparatus (EPV1, EPV2) comprising an apparatus (CA) according to claim 11 or claim 12.

14. A radio frequency identification system comprising an apparatus (CA) according to claim 11 or claim 12.

15. A wireless energy supply system (WESS) comprising a radio frequency identification system according to claim 14.


**Patentansprüche**

1. Verfahren (MET) zur Steuerung der Ablesung einer Funkfrequenzidentifikationseinheit (IU), wobei das besagte Verfahren (MET) folgende Schritte umfasst:

   - Bestimmen (S1) von Ausbreitungsinformationen (PI1, PI2, PI3) einer beweglichen Vorrichtung (EPV1, EPV2), entweder umfassend die besagte Funkfrequenzidentifikationseinheit (IU) oder umfassend einen Funkfrequenzidentifikationsleser (IR), und
   - Anpassen (S2), basierend auf den besagten Ausbreitungsinformationen (PI1, PI2, PI3), einer Ausgabeleistung des besagten Funkfrequenzidentifikationslesers (IR) zum Ablesen der besagten Funkfrequenzidentifikationseinheit (IU), wobei die besagten Ausbreitungsinformationen (PI1, PI2, PI3) Geschwindigkeitsinformationen über eine aktuelle Geschwindigkeit (V1, V2) der besagten beweglichen Vorrichtung (EPV1, EPV2) umfassen,

   dadurch gekennzeichnet, dass ein erster Ausgabeleistungswert einem ersten Geschwindigkeitsbereich oder einem ersten Geschwindigkeitswert entspricht, und mindestens ein zweiter Ausgabeleistungswert, der größer ist als der besagte erste Ausgabeleistungswert, mindestens einem zweiten Geschwindigkeitsbereich oder mindestens einem zweiten Geschwindigkeitswert entspricht, mit mindestens einem Geschwindigkeitswert größer als ein Geschwindigkeitswert des besagten ersten Geschwindigkeitsbereichs oder der besagte erste Geschwindigkeitswert, so dass eine Verweilzeit innerhalb eines Interaktionsbereichs für eine elektromagnetische Interaktion zwischen dem besagten Funkfrequenzidentifikationsleser (IR) und der besagten Funkfrequenzidentifikationseinheit (IU) konstant oder innerhalb eines vorausdefinierten Zeitbereichs gehalten wird, um eine zuverlässige Kommunikation zwischen dem besagten Funkfrequenzidentifikationsleser (IR) und der besagten Funkfrequenzidentifikationseinheit (IU) und eine zuverlässige Identifikation der besagten Funkfrequenzidentifikationseinheit (IU) zu ermöglichen.

2. Verfahren (MET) nach Anspruch 1, wobei die besagten Informationen (PI1, PI2, PI3) über die besagte aktuelle Geschwindigkeit (V1, V2) durch einen Geschwindigkeitsmesser (VS), durch eine Ausbreitungszeitmessung oder durch ein Automobilelektroniksystem (AES) bestimmt werden.

3. Verfahren (MET) nach Anspruch 1 oder 2, wobei die besagten Positionierungsinformationen weiterhin Informationen über eine Distanz (D1, D2) zwischen einem Schwingelement für einen Wechselstrom (A1, A2, A3, A3) umfassen, das mit dem besagten Funkfrequenzidentifikationsleser (IR) und der besagten Funkfrequenzidentifikationseinheit (IU) verbunden ist, wobei der besagte erste Ausgabeleistungswert weiterhin einem ersten Distanzbereich oder einem ersten Distanzwert entspricht, und wobei die besagte mindestens eine zweite Ausgabeleistung weiterhin mindestens einem zweiten Distanzbereich entspricht, der sich von dem besagten ersten Distanzbereich unterscheidet, oder mindestens einem zweiten Distanzwert, der sich von dem besagten ersten Distanzwert unterscheidet.

4. Verfahren (MET) nach Anspruch 3, wobei die besagte Ausgabeleistung auf den besagten ersten Ausgabeleistungswert oder den besagten mindestens zweiten Ausgabeleistungswert festgesetzt wird, in Abhängigkeit von einem Vergleich der besagten Distanz (D1, D2) mit dem besagten ersten Distanzbereich oder dem besagten mindestens zweiten Distanzbereich oder mit dem besagten ersten Distanzwert oder dem besagten mindestens zweiten Distanzwert.

5. Verfahren (MET) nach Anspruch 3, wobei die besagten Informationen (PI1, PI2, PI3) über die besagte Distanz (D1, D2) durch ein Mustererkennungssystem (CAM, IAU) bestimmt werden.

6. Verfahren (MET) nach einem beliebigen der vorstehenden Ansprüche, wobei die besagte bewegliche Vorrichtung (EPV1, EPV2) die besagte Funkfrequenzidentifikationseinheit (IU) umfasst, wobei ein Funkfrequenzidentifikationssystem (RFIDS) den besagten Funkfrequenzidentifikationsleser (IR) umfasst, wobei der besagte Bestimmungsschritt (S1) den Teilschritt des Sendens der besagten Ausbreitungsinformationen (PI1) über eine drahtlose Verbindung (WC) von der besagten beweglichen Vorrichtung (EPV1, EPV2) an das besagte Funkfrequenzidentifikationssystem und/oder den Teilschritt des Messens der besagten beweglichen Vorrichtung (EPV1, EPV2) durch ein Messsystem (MEAS-S) zum Erhalten der besagten Ausbreitungsinformationen (PI2, PI3) umfasst.

7. Verfahren (MET) nach Anspruch 6, wobei der besagte Teilschritt des Messens eine Geschwindigkeitsmessung für die besagte bewegliche Vorrichtung (EPV1, EPV2) und/oder eine Mustererkennung für die besagte bewegliche Vorrichtung (EPV1, EPV2) umfasst.

8. Verfahren (MET) nach Anspruch 6 oder 7, wobei eine Spur (RD) der besagten beweglichen Vorrichtung (EPV1, EPV2) innerhalb einer vorausdefinierten Länge der besagten Spur (RD) eine vorausdefinierte Anzahl von mindestens einem Schwingelement für einen elektromagnetischen Strom (A1, A2, A3, A4) umfasst, das mit dem besagten Funkfrequenzidentifikationsleser (IR) verbunden ist, und wobei der besagte Anpassungsschritt (S2) eine Anpassung der besagten Ausgabeleistung umfasst, die der besagten vorausdefinierten Anzahl von dem besagten mindestens einen Schwingelement (A1, A2, A3, A4) bereitgestellt wird.

9. Verfahren (MET) nach Anspruch 8, wobei die besagte vorausdefinierte Länge der besagten Spur (RD) an einen durchschnittlichen Geschwindigkeitswert beweglicher Vorrichtungen (EPV1, EPV2) angepasst wird.

10. Computerprogramm mit einem Programmcode zum Durchführen eines der Verfahren nach einem beliebigen der vorstehenden Ansprüche, wenn das Computerprogramm auf einem Computer oder Prozessor ausgeführt wird.

11. Vorrichtung (CA) zur Steuerung der Ablesung einer Funkfrequenzidentifikationseinheit (IU), wobei die besagte Vorrichtung (CA) Folgendes umfasst:

- Mittel (DU) zum Bestimmen von Ausbreitungsinformationen (PI1, PI2, PI3), umfassend Geschwindigkeitsinformationen über eine aktuelle Geschwindigkeit (V1, V2) einer beweglichen Vorrichtung (EPV1, EPV2), die entweder die besagte Identifikationseinheit (IU) oder einen Funkfrequenzidentifikationsleser (IR) umfasst, und
- Mittel (AU) zum Anpassen, basierend auf den besagten Ausbreitungsinformationen (PI1, PI2, PI3), einer Ausgabeleistung des besagten Funkfrequenzidentifikationslesers (IR) zum Ablesen der besagten Funkfrequenzidentifikationseinheit (IU),

**dadurch gekennzeichnet, dass** ein erster Ausgabeleistungswert einem ersten Geschwindigkeitsbereich oder einem ersten Geschwindigkeitswert entspricht, und mindestens ein zweiter Ausgabeleistungswert, der größer ist als der besagte erste Ausgabeleistungswert, mindestens einem zweiten Geschwindigkeitsbereich oder mindestens einem zweiten Geschwindigkeitswert entspricht, mit mindestens einem Geschwindigkeitswert größer als ein Geschwindigkeitswert des besagten ersten Geschwindigkeitsbereichs oder der besagte erste Geschwindigkeitswert, so dass eine Verweilzeit innerhalb eines Interaktionsbereichs für eine elektromagnetische Interaktion zwischen dem besagten Funkfrequenzidentifikationsleser (IR) und der besagten Funkfrequenzidentifikationseinheit (IU) konstant oder innerhalb eines vorausdefinierten Zeitbereichs gehalten wird, um eine zuverlässige Kommunikation zwischen dem besagten Funkfrequenzidentifikationsleser (IR) und der besagten Funkfrequenzidentifikationseinheit (IU) und eine zuverlässige Identifikation der besagten Funkfrequenzidentifikationseinheit (IU) zu ermöglichen.

**12.** Vorrichtung (CA) nach Anspruch 11, wobei die besagte Vorrichtung (CA) der besagte Funkfrequenzidentifikationsleser (IR) oder eine Steuerungseinheit zum Steuern eines Funkfrequenzidentifikationssystems ist.

**13.** Bewegliche Vorrichtung (EPV1, EPV2), umfassend eine Vorrichtung (CA) nach Anspruch 11 oder 12.

**14.** Funkfrequenzidentifikationssystem, umfassend eine Vorrichtung (CA) nach Anspruch 11 oder 12.

**15.** Drahtloses Energieversorgungssystem (WESS), umfassend ein Funkfrequenzidentifikationssystem nach Anspruch 14.

**Revendications**

**1.** Procédé (MET) pour commander une sortie en lecture d'une unité d'identification par radiofréquence (IU), ledit procédé (MET) comprenant les étapes suivantes :

- déterminer (S1) des informations de propagation (PI1, PI2, PI3) d'un appareil mobile (EPV1, EPV2) soit comprenant ladite unité d'identification par radiofréquence (IU) soit comprenant un lecteur d'identification par radiofréquence (IR), et
- adapter (S2) sur la base desdites informations de propagation (PI1, PI2, PI3) une puissance de sortie dudit lecteur d'identification par radiofréquence (IR) pour la sortie en lecture de ladite unité d'identification par radiofréquence (IU), lesdites informations de propagation (PI1, PI2) comprennent des informations de vitesse d'une vitesse actuelle (V1, V2) dudit appareil mobile (EPV1, EPV2),

**caractérisé en ce qu'**une première valeur de puissance de sortie est en corrélation avec une première plage de vitesse ou une première valeur de vitesse, et au moins une seconde valeur de puissance de sortie plus grande que ladite première valeur de puissance de sortie est en corrélation avec au moins une seconde plage de vitesse ou au moins une seconde valeur de vitesse avec au moins une valeur de vitesse plus grande qu'une valeur de vitesse de ladite première plage de vitesse ou de ladite première valeur de vitesse de sorte qu'un temps de séjour à l'intérieur d'une zone d'interaction pour une interaction électromagnétique entre ledit lecteur d'identification par radiofréquence (IR) et ladite unité d'identification par radio fréquence (IU) soit maintenu constant ou à l'intérieur d'une plage de temps prédéfinie pour permettre une communication fiable entre ledit lecteur d'identification par radiofréquence (IR) et ladite unité d'identification par radiofréquence (IU) et une identification fiable de ladite unité d'identification par radiofréquence (IU).

**2.** Procédé (MET) selon la revendication 1, dans lequel lesdites informations (PI1, PI2, PI3) de ladite vitesse actuelle (V1, V2) sont déterminées par un capteur de vitesse (VS), par une mesure de temps de propagation ou par un système électronique automobile (AES).

**3.** Procédé (MET) selon la revendication 1 ou la revendication 2, dans lequel lesdites informations de positionnement comprennent en outre des informations d'une distance (D1, D2) entre un élément oscillant pour un courant alternatif (A1, A2, A3, A3) connecté audit lecteur d'identification par radiofréquence (IR) et à ladite unité d'identification par radiofréquence (IU), ladite première valeur de puissance de sortie étant en outre en corrélation avec une première plage de distance ou une première valeur de distance, et ladite au moins une seconde puissance de sortie étant en outre en corrélation avec au moins une seconde plage de distance différente de ladite première plage de distance ou avec au moins une seconde valeur de distance différente de ladite première valeur de distance.

**4.** Procédé (MET) selon la revendication 3, dans lequel ladite puissance de sortie est réglée à ladite première valeur de puissance de sortie ou à ladite au moins seconde valeur de puissance de sortie en fonction d'une comparaison de ladite distance (D1, D2) avec ladite première plage de distance ou ladite au moins seconde plage de distance ou avec ladite première valeur de distance ou ladite au moins seconde valeur de distance.

**5.** Procédé (MET) selon la revendication 3, dans lequel lesdites informations (P1, P2, P3) de ladite distance (D1, D2) sont déterminées par un système de reconnaissance des formes (CAM, IAU).

**6.** Procédé (MET) selon l'une quelconque des revendications précédentes, dans lequel ledit appareil mobile (EPV1, EPV2) comprend ladite unité d'identification par radiofréquence (IU), dans lequel un système d'identification par radiofréquence (RFIDS) comprend ledit lecteur d'identification par radiofréquence (IR), dans lequel ladite étape de détermination (S1) comprend la sous-étape de transmission desdites informations de propagation (EP1) via une connexion sans fil (WC) dudit appareil mobile (EPV1, EPV2) audit système d'identification par radiofréquence et/ou la sous-étape de mesure dudit appareil mobile (EPV1, EPV2) par un système de mesure (MEAS-S) pour obtenir lesdites informations de propagation (PI2, PI3).

**7.** Procédé (MET) selon la revendication 6, dans lequel ladite sous-étape de mesure comprend une mesure de vitesse pour ledit appareil mobile (EPV1, EPV2) et/ou une reconnaissance des formes pour ledit appareil mobile (EPV1, EPV2).

**8.** Procédé (MET) selon la revendication 6 ou la revendication 7, dans lequel une piste (RD) dudit appareil mobile (EPV1, EPV2) comprend à l'intérieur d'une longueur prédéfinie de ladite piste (RD) un nombre prédéfini d'au moins un élément oscillant pour un courant électromagnétique (A1, A2, A3, A4) connecté audit lecteur d'identification par radiofréquence (IR), et dans lequel ladite étape d'adaptation (S2) comprend une adaptation de ladite puissance de sortie fournie audit nombre prédéfini dudit au moins un élément oscillant (A1, A2, A3, A4).

**9.** Procédé (MET) selon la revendication 8, dans lequel ladite longueur prédéfinie de ladite piste (RD) est adaptée à une valeur de vitesse moyenne d'appareils mobiles (EPV1, EPV2).

**10.** Programme informatique ayant un code de programme pour effectuer un des procédés de l'une quelconque des revendications précédentes, lorsque le programme informatique est exécuté sur un ordinateur ou un processeur.

**11.** Appareil (CA) pour commander une sortie en lecture d'une unité d'identification par radiofréquence (IU), ledit appareil (CA) comprenant :

- des moyens (DU) pour déterminer des informations de propagation (PI1, PI2, PI3) incluant des informations de vitesse d'une vitesse actuelle (V1, V2) d'un appareil mobile (EPV1, EPV2) soit comprenant ladite unité d'identification (IU) soit comprenant un lecteur d'identification par radiofréquence (IR), et
- des moyens (AU) pour adapter sur la base desdites informations de propagation (PI1, PI2, PI3) une puissance de sortie dudit lecteur d'identification par radiofréquence (IR) pour la sortie en lecture de ladite unité d'identification par radiofréquence (IU),

**caractérisé en ce qu'**une première valeur de puissance de sortie est en corrélation avec une première plage de vitesse ou une première valeur de vitesse, et au moins une seconde valeur de puissance de sortie plus grande que ladite première valeur de puissance de sortie est en corrélation avec au moins une seconde plage de vitesse ou au moins une seconde valeur de vitesse avec au moins une valeur de vitesse plus grande qu'une valeur de vitesse de ladite première plage de vitesse ou de ladite première valeur de vitesse de sorte qu'un temps de séjour à l'intérieur d'une zone d'interaction pour une interaction électromagnétique entre ledit lecteur d'identification par radiofréquence (IR) et ladite unité d'identification par radio fréquence (IU) soit maintenu constant ou à l'intérieur d'une plage de temps prédéfinie pour permettre une communication fiable entre ledit lecteur d'identification par radiofréquence (IR) et ladite unité d'identification par radiofréquence (IU) et une identification fiable de ladite unité d'identification par radiofréquence (IU).

**12.** Appareil (CA) selon la revendication 11, dans lequel ledit appareil (AR) est ledit lecteur d'identification par radiofréquence (IR) ou une unité de commande pour commander un système d'identification par radiofréquence.

**13.** Appareil mobile (EPV1, EPV2) comprenant un appareil (CA) selon la revendication 11 ou la revendication 12.

**14.** Système d'identification par radiofréquence comprenant un appareil (CA) selon la revendication 11 ou la revendication 12.

**15.** Système d'alimentation en énergie sans fil (WESS) comprenant un système d'identification par radiofréquence selon la revendication 14.

**FIG. 1**

EP 2 731 047 B1

*FIG. 2*

EP 2 731 047 B1

## a)

## b)

*FIG. 3*

EP 2 731 047 B1

MET

START

S1

S2

FIG. 4

CA

IN    IN-DU        IN-AU        OUT

PI1                                              CI

DU              AU

PI2
PI3

OUT-DU        OUT-AU

FIG. 5

EP 2 731 047 B1

**EP 2 731 047 B1**

**Patent documents cited in the description**

- US 20060197652 A1
- US 20090309704 A1